(19) Europäisches Patentamt

European Patent Office

Office européen des brevets

(11) Numéro de publication: **0 273 788 B1**

(12) **FASCICULE DE BREVET EUROPEEN**

(45) Date de publication de fascicule du brevet:
13.11.91

(21) Numéro de dépôt: 87402648.7

(22) Date de dépôt: 24.11.87

(51) Int. Cl.⁵: **A01G 23/08**

(54) **Machine d'abattage et de façonnage d'arbres.**

(30) Priorité: 24.11.86 FR 8616305

(43) Date de publication de la demande:
06.07.88 Bulletin 88/27

(45) Mention de la délivrance du brevet:
13.11.91 Bulletin 91/46

(84) Etats contractants désignés:
**AT BE DE ES GB SE**

(56) Documents cités:
DE-A- 3 524 570
FR-A- 2 314 435
US-A- 4 124 047

(73) Titulaire: **SOCIETE INDUSTRIELLE ET FORES-
TIERE D'ETUDES ET DE REALISATIONS
(SIFER)
Echouboulains
F-77830 Valence en Brie(FR)**

(72) Inventeur: **Pomies, Jean-Pierre
La Grance Maison Paucourt
F-45200 Montargis(FR)**
Inventeur: **Gomel, Bernard
18, rue Thibault
F-89300 Joigny(FR)**

(74) Mandataire: **Nony, Michel et al
Cabinet Nony 29, rue Cambacérès
F-75008 Paris(FR)**

EP 0 273 788 B1

## Description

La présente invention concerne une machine d'abattage et de façonnage d'arbres, et notamment une tête de travail pour une telle machine.

Il existe deux conceptions de têtes de travail équipant les machines connues qui peuvent assurer l'abattage des arbres et leur façonnage.

Suivant la première conception, la tête de travail possède, en position d'abattage et en position de façonnage, la même liberté angulaire dans le plan vertical. Or, s'il est souhaitable qu'en position de façonnage la tête de travail puisse s'adapter à la position de l'arbre à façonner sans qu'il soit besoin de manoeuvrer l'engin porteur de la dite tête de travail, on a, au contraire, intérêt à diminuer cette liberté angulaire lorsque la tête de travail est utilisée pour l'abattage, de manière à diminuer les efforts subis par le bras portant la tête de travail. En effet, plus la liberté angulaire augmente, plus le porte-à-faux augmente et, étant donné les efforts en jeu, on arrive alors à de telles dimensions de ce bras et de l'engin porteur si l'on veut abattre autre chose que des arbustes, que le poids en devient prohibitif et que l'encombrement aboutit à de sérieuses difficultés pour rentrer dans les peuplements, voire interdit même cette entrée.

C'est pourquoi, suivant la deuxième conception, la tête de travail a, en position d'abattage, une liberté angulaire moindre que celui qu'elle a en position de façonnage. Mais alors on se trouve devant un autre inconvénient qui réside dans la complexité plus grande de construction de cette tête, du fait qu'elle doit comporter, en plus des organes destinés au façonnage et à l'abattage, le dispositif assurant la limitation de la liberté angulaire en position d'abattage.

La présente invention a pour but de supprimer cet inconvénient en proposant une tête de travail dont la conception même lui donne la liberté angulaire souhaitable en position de façonnage et la limitation de cette liberté en position d'abattage, sans qu'il soit nécessaire d'ajouter un dispositif spécial.

On connait par ailleurs par le document US-A-4 083 463 une machine d'abattage d'arbres possédant toutes les caractéristiques du préambule de la revendication 1, en l'occurence des organes de travail montés sur une ossature; une chape de suspension pour suspendre ladite machine à un bras porteur, ladite chape possédant une partie supérieure de suspension et une partie tournante inférieure, ladite partie inférieure étant montée à rotation sur la partie supérieure autour d'un axe vertical; une pièce de montage pour monter ladite ossature sur ladite partie inférieure de la chape, ladite pièce de montage possédant un premier axe de pivotement horizontal pour monter ladite pièce sur ladite partie inférieure et un second axe de pivotement horizontal perpendiculaire au premier axe de pivotement pour monter ladite ossature sur ladite pièce de montage; et des moyens d'entraînement pour provoquer un mouvement de pivotement de ladite ossature autour dudit second axe de pivotement depuis une position horizontale à une position verticale.

Toutefois, cette machine visant uniquement à l'abattage des arbres, les problèmes évoqués ci-dessus ne se posent pas.

L'invention a pour objet une machine selon la revendication 1.

Des caractéristiques secondaires de l'invention sont définies aux revendications 2,3 et 4.

D'autres caractéristiques et avantages de l'invention apparaîtront au cours de la description qui va suivre en se référant aux trois dessins joints qui donnent à titre indicatif et non limitatif, un exemple de réalisation de l'invention.

La figure 1 montre une tête de travail suivant l'invention en position de façonnage.

La figure 2 montre la même tête en position d'abattage.

La figure 3 est une coupe partielle suivant la ligne III-III de la figure 2.

L'ossature de la tête de travail est constituée par une poutre 1 dont la section est en U et qui porte quatre couteaux 2, 3, 4 et 5 mobiles et groupés deux à deux en opposition, deux rouleaux 6 et 7 munis de lames 8 à leur périphérie, deux plaques 28 et 29 légèrement coudées, un caisson 11, et un cylindre hydraulique 9 dont le corps est articulé en 10 sur la poutre 1 et dont la tige est articulée sur un axe 15 porté par une pièce 13 qui porte également un second axe 12 sur lequel la poutre 1, et donc l'ensemble de la tête de travail, est articulée.

La pièce 13 est suspendue par un axe 14 perpendiculaire à l'axe 12, à une chape 16, qui comprend deux parties 17 et 18 tournant l'une par rapport à l'autre autour de l'axe 30, grâce à un dispositif hydraulique non représenté parce que ne faisant pas partie de l'invention, la partie 17 étant suspendue par l'intermédiaire d'un axe 24 à un bras porteur 19 dont l'extrémité seule apparaît sur le dessin.

Sur la partie 17 de la chape 16, sont soudées deux plaques d'arrêt 20 et 21 qui portent, d'une part, un axe 22 sur lequel est articulée la tige d'un second cylindre hydraulique 23 dont le corps (non représenté) est lui-même articulé sur le bras porteur 19 et, d'autre part, deux butées 25 et 26, soudées la première sur la plaque 20 et la seconde sur la plaque 21.

Le caisson 11 abrite un dispositif classique de tronçonnage non représenté ni décrit parce que ne faisant pas partie de l'invention et dont 27 constitue le groupe de commande.

Dans ces conditions, le fonctionnement s'établit comme expliqué ci-après.

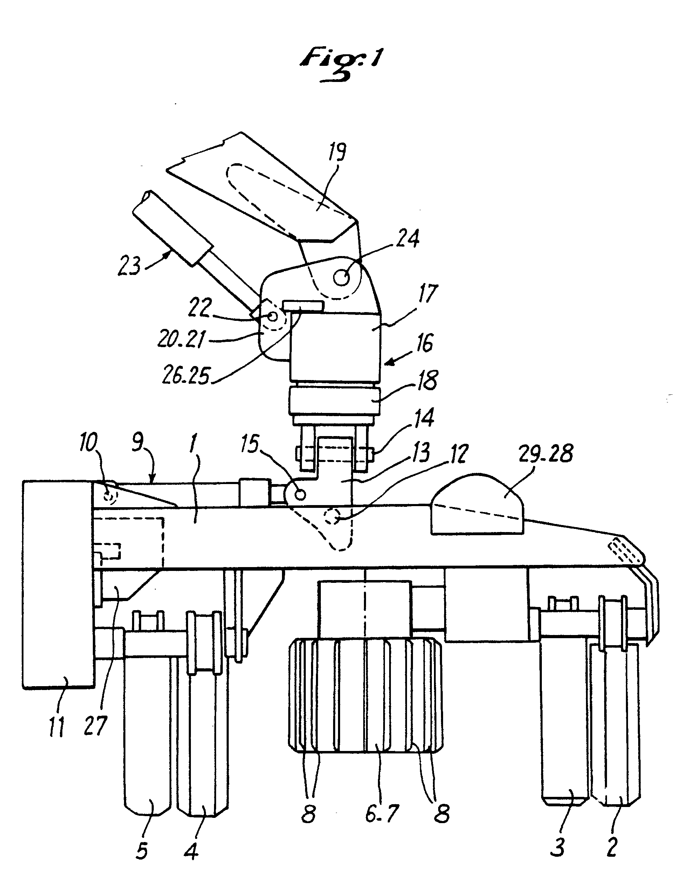

Dans la position de façonnage qui est illustrée à la figure 1, la partie 18 de la chape 16 tourne librement par rapport à la partie 17 autour de l'axe 30 et il s'en suit que la tête de travail, suspendue à cette partie 18, peut prendre n'importe quelle position angulaire par rapport à la partie 17 de la chape et donc par rapport au bras porteur 19 sur lequel celle-ci est articulée.

De même, la tête de travail peut pivoter librement à la fois autour des axes 12 et 14, le pivotement libre autour de 12 lui permettant de conserver sa position horizontale lorsqu'on incline vers l'avant ou vers l'arrière la chape 16, sous l'action du cylindre 23, pour placer correctement la tête de travail par rapport à l'arbre à façonner, et la liberté angulaire autour de l'axe 14 permettant d'éviter la transmission à la chape 16 et aus bras porteur 19, des à-coups latéraux au cours du façonnage.

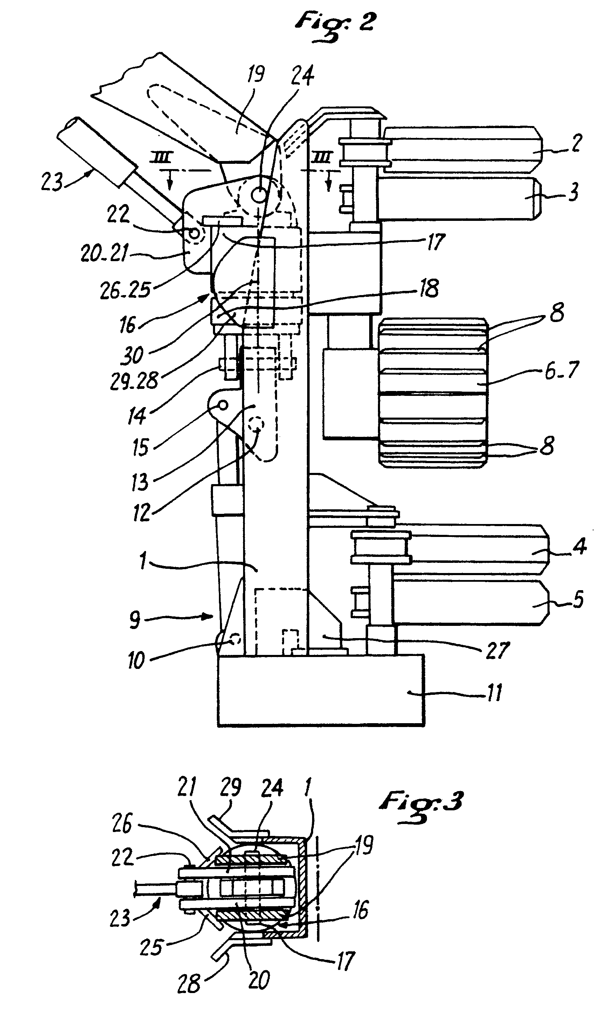

Pour mettre la tête de travail dans la position d'abattage illustrée à la figure 2, on relève si nécessaire le bras porteur 19 et on actionne le cylindre 9 en extension. Celui-ci tend à écarter l'un de l'autre les axes 10 et 15; mais comme l'axe 15, pris dans la pièce de suspension 13, ne peut pas se déplacer, c'est l'axe 10 qui se déplace, faisant ainsi basculer l'ensemble de la tête de travail autour de l'axe 12.

Dans ce mouvement, une partie de la poutre en U qui constitue l'ossature de la tête de travail vient s'emboîter sur l'ensemble de la chape 16 ainsi qu'il apparaît sur la figure 3, neutralisant ainsi l'axe 14 et supprimant toute liberté angulaire de la tête de travail autour de cet axe. La tête de travail peut ainsi être manoeuvrée sans risque de balancement pouvant mettre en cause la stabilité de l'engin sur lequel est fixé le bras porteur 19. Cette disposition, connue en soi, est obtenue par la seule forme particulière de la poutre portant la tête de travail, forme qui, par ailleurs, apporte un raidissement de cette poutre sans augmenter son poids.

Etant donné qu'il s'agit d'un matériel qui travaille dans des conditions très sévères, les différents axes peuvent prendre une certaine usure. Mais cette usure ne doit pas faire obstacle au bon fonctionnement de l'ensemble. C'est pourquoi l'ossature 1 a été équipée des plaques coudées 28 et 29 qui,en cas d'usure, notamment de l'axe 12, assurent le guidage de la chape 16 pour l'amener entre les flancs de la poutre en U.

La tête de travail illustrée présente un autre avantage en position d'abattage, à savoir la limitation de son débattement angulaire autour de l'axe 30, ainsi qu'on le voir sur la figure 3.

En effet, si l'on fait tourner la partie 18 de la chape 16 par rapport à la partie 17, la poutre 1 est elle-même entraînée en rotation, mais seulement jusqu'à ce que l'une des ailes de la poutre vienne en contact avec l'une des butées 25 et 26 et arrête ainsi le mouvement de rotation, une telle disposition constituant une garantie à l'encontre de manoeuvres risquant d'entraîner un porte-à-faux trop important de la tête de travail par rapport à l'engin porteur ou d'endommager les tuyauteries flexibles.

Pour revenir en position de façonnage, on manoeuvre le cylindre 9 dans l'autre sens : l'axe 10 se rapproche de l'axe 13, ce qui fait revenir la tête de travail à l'horizontale où elle se retrouve en position de façonnage.

Il est entendu que l'on peut, sans sortir de l'invention, modifier des détails de construction dans les dispositifs décrits ou dans leurs arrangements en vue d'obtenir un même résultat.

Par exemple, il serait possible de remplacer le cylindre à double effet 9 par un cylindre à simple effet. Dans ce cas, le retour de la tête de travail en position de façonnage s'effectuerait automatiquement par le propre poids de cette tête grâce à la répartition de son poids en neutralisant le dit cylindre, un dispositif étant prévu sur le circuit hydraulique pour contrôler le retour de la dite tête et/ou la vitesse de ce retour.

Au lieu d'être disposées sur la chape 16, les butées 25 et 26 pourraient être installées sur le bras porteur 19 lui-même.

L'ossature de la tête de travail pourrait avoir une section en I , pourvu que les ailes du I soient d'une dimension permettant le blocage de l'axe 14, ou même être constituée par une poutre en profilés assemblés pourvu que leur agencement laisse un espace libre assurant le blocage du dit axe 14.

**Revendications**

1. Machine d'abattage et de façonnage d'arbres possédant :
   - une tête de travail comprenant des moyens d'ébranchage pour façonner un arbre, et des moyens de préhension d'un arbre, lesdits moyens d'ébranchage et de préhension étant montés sur une ossature,
   - une chape de suspension (16) pour suspendre ladite machine à un bras porteur (19), ladite chape possédant une partie supérieure de suspension (17) et une partie tournante inférieure (18), ladite partie inférieure étant montée à rotation sur la partie supérieure autour d'un axe vertical,
   - une pièce de montage (13) pour monter ladite ossature sur ladite partie inférieure de la chape, ladite pièce de montage possédant un premier axe de pivotement horizontal (14) pour monter ladite pièce sur ladite partie inférieure et un second axe de pivotement horizontal (12) perpendiculaire au premier axe de pivotement horizontal (14) pour monter ladite ossature sur ladite pièce de montage,
- des moyens d'entraînement (9) pour provoquer un mouvement de pivotement de ladite ossature autour dudit second axe de pivotement horizontal (12) depuis une position horizontale de façonnage à une position verticale d'abattage,

caractérisée par le fait que ladite ossature comporte des moyens d'entraînement pour les moyens d'ébranchage et des moyens de coupe pour abattre un arbre, et se présente sous la forme d'une poutre en U (1) délimitant un logement entre ses flancs, ladite tête de travail pouvant tourner librement dans sa dite position horizontale autour dudit axe vertical et dudit premier axe de pivotement horizontal (14), l'axe de pivotement horizontal (12) étant placé de telle façon par rapport à la poutre en U, qu'il permette dans ladite position verticale, que la chape soit logée dans le logement délimité entre les flancs de la poutre en U, de manière à éviter tout mouvement de pivotement de ladite tête de travail autour du premier axe horizontal tout en permettant au moins un mouvement de pivotement limité de ladite tête de travail autour dudit axe vertical.

2. Machine selon la revendication 1, caractérisée par le fait qu'elle possède des moyens de butées (25,26) pour limiter le mouvement de pivotement de ladite tête de travail autour dudit axe vertical lorsque ladite tête de travail est dans sa position verticale.

3. Machine selon la revendication 2, caractérisée par le fait que lesdits moyens de butée comprennent des plaques de butées montées sur ladite partie supérieure de la chape pour venir en contact avec les flancs de la poutre en U.

4. Machine selon la revendication 1, caractérisée par le fait qu'elle possède des moyens de guidage (28,29) pour guider ladite chape dans ledit logement de la poutre en U.

**Claims**

1. Tree-felling and -treating machine possessing:
- a working head comprising lopping means for treating a tree, and means for gripping a tree, the said lopping and gripping means being mounted on a framework,
- a suspension cap-piece (16) for suspending the said machine from a carrying arm (19), the said cap-piece possessing an upper suspension part (17) and a lower rotating part (18), the said lower part being mounted rotatably on the upper part about a vertical axis,
- a mounting piece (13) for mounting the said framework on the said lower part of the cap-piece, the said mounting piece possessing a first horizontal pivot pin (14) for mounting the said piece on the said lower part, and a second horizontal pivot pin (12) perpendicular to the first horizontal pivot pin (14), for mounting the said framework on the said mounting piece,
- drive means (9) for causing a pivoting movement of the said framework about the said second horizontal pivot pin (12), from a horizontal treatment position to a vertical felling position,

characterised in that the said framework comprises a drive means for the lopping means, and cutting means for felling a tree, and is in the form of a U-beam (1) delimiting a housing between its flanks, the said working head being able to rotate freely in its said horizontal position about the said vertical axis and the said first horizontal pivot pin (14), the horizontal pivot pin (12) being placed in such a way with respect to the U-beam that it enables, in the said vertical position, the cap-piece to be housed in the housing delimited between the flanks of the U-beam, so as to prevent any pivoting movement of the said working head about the first horizontal axis, whilst at the same time permitting at least a limited pivoting movement of the said working head about the said vertical axis.

2. Machine according to Claim 1, characterised in that it possesses stop means (25, 26) for limiting the pivoting movement of the said working head about the said vertical axis when the said working head is in its vertical position.

3. Machine according to Claim 2, characterised in that the said stop means comprise stop plates mounted on the said upper part of the cap-piece in order to come in to contact with the flanks of the U-beam.

4. Machine according to Claim 1, characterised in that it possesses guide means (28, 29) for guiding the said cap-piece in the said housing of the U-beam.

**Patentansprüche**

1. Maschine zum Fällen und Bearbeiten von Bäumen, umfassend

   einen Arbeitskopf mit einer Entastungseinrichtung zum Bearbeiten eines Baumes und einer Einrichtung zum Greifen eines Baumes, wobei die Entastungs- und Greifeinrichtungen an einem Gestell angebracht sind,

   einem Hängebügel (16) zum Anhängen der Maschine an einen Tragarm (19), wobei der Bügel ein oberes Aufhängungsteil (17) und ein diesem gegenüber um eine vertikale Achse drehbar gelagertes unteres Drehteil (18) aufweist,

   ein Montageteil (13) zur Verbindung des Gestells mit dem unteren Teil des Bügels, wobei das Montageteil eine erste horizontale Schwenkachse (14) zu seiner Verbindung mit dem unteren Teil und eine zu der ersten horizontalen Schwenkachse (14) senkrechte zweite horizontale Schwenkachse (12) zur Verbindung des Gestells mit dem Montageteil aufweist, und

   eine Antriebseinrichtung (9) zum Verschwenken des Gestells um die zweite horizontale Schwenkachse (12) aus einer horizontalen Bearbeitungsstellung in eine vertikale Fällstellung,

   dadurch gekennzeichnet, daß das Gestell eine Antriebseinrichtung für die Entastungseinrichtung und eine Schneideinrichtung zum Fällen eines Baumes trägt und die Form eines U-Trägers (1) mit einem zwischen seinen Schenkeln begrenzten Aufnahmeraum hat, wobei der Arbeitskopf in seiner horizontalen Stellung um die vertikale Achse und um die erste horizontale Schwenkachse (14) frei drehbar ist, und wobei die horizontale Schwenkachse (12) bezüglich des U-Trägers derart angeordnet ist, daß sie in der senkrechten Stellung eine Aufnahme der Gabel in dem von den Schenkeln des U-Trägers begrenzten Aufnahmeraum gestattet und dadurch jegliche Schwenkbewegung des Arbeitskopfes um die erste horizontale Achse verhindert, jedoch mindestens eine begrenzte Schwenkbewegung des Arbeitskopfes um die senkrechte Achse gestattet.

2. Maschine nach Anspruch 1, gekennzeichnet durch Anschlageinrichtungen (25, 26) zur Begrenzung der Schwenkbewegung des Arbeitskopfes um die vertikale Achse, wenn sich dieser in seiner vertikalen Stellung befindet.

3. Maschine nach Anspruch 2, dadurch gekennzeichnet, daß die Anschlageinrichtungen an dem oberen Teil der Gabel angebrachte Anschlagplatten zum Eingriff mit den Schenkeln des U-Trägers aufweisen.

4. Maschine nach Anspruch 1, gekennzeichnet durch eine Führungseinrichtung (28, 29), die den Bügel in den Aufnahmeraum des U-Trägers führt.

## Fig.1

*Fig. 2*

*Fig. 3*